# EUROPÄISCHE PATENTSCHRIFT

(11) **EP 3 261 435 B1**
(45) Veröffentlichungstag und Bekanntmachung des Hinweises auf die Patenterteilung: **20.03.2019**
(21) Anmeldenummer: 15817337.7
(22) Anmeldetag: 22.12.2015
(51) Int. Cl.: A01N 25/04, A01N 25/24, A01N 37/46

(54) **PFLANZENSCHUTZ- UND/ODER PFLANZENWACHSTUMSFÖRDERUNGSSYSTEM**
PLANT PROTECTION AND/OR PLANT GROWTH PROMOTION SYSTEM
SYSTÈME DE PROTECTION PHYTOSANITAIRE ET/OU DE STIMULATION DE LA CROISSANCE VÉGÉTALE

(30) Priorität: 24.02.2015 DE 102015203317
(43) Veröffentlichungstag der Anmeldung: 03.01.2018
(73) Patentinhaber: Rheinisch-Westfälische Technische Hochschule Aachen (RWTH), 52062 Aachen (DE)
(72) Erfinder: JAKOB, Felix, 41812 Erkelenz (DE); PICH, Andrij, 52134 Herzogenrath (DE); RÜBSAM, Kristin, 52054 Aachen (DE); CONRATH, Uwe, 4720 Kelmis (BE); SÖZER, Nursen, 52531 Übach-Palenberg (DE); SCHWANEBERG, Ulrich, 4728 Kelmis-Hergenrath (BE)
(74) Vertreter: Eisenführ Speiser
(86) Internationale Anmeldenummer: PCT/EP2015/080922
(87) Internationale Veröffentlichungsnummer: WO 2016/134806

(56) Entgegenhaltungen:
- WO-A2-2009/151788
- Anonymous: "bifuprots", , 1. Januar 2014 (2014-01-01), XP055252148, Gefunden im Internet: URL:http://www.biosc.de/bifuprots [gefunden am 2016-02-22]
- MUHAMMAD NOOR ET AL: "Polymersome surface decoration by an EGFP fusion protein employing Cecropin A as peptide anchor", JOURNAL OF BIOTECHNOLOGY, ELSEVIER SCIENCE PUBLISHERS, AMSTERDAM, NL, Bd. 157, Nr. 1, 14. Oktober 2011 (2011-10-14), Seiten 31-37, XP028395726, ISSN: 0168-1656, DOI: 10.1016/J.JBIOTEC.2011.10.005 [gefunden am 2011-10-20]

## Beschreibung

Die Erfindung betrifft ein Pflanzenschutz- und/oder Pflanzenwachstumsförderungssystem, umfassend wenigstens ein Ankerpeptid zur Bindung an einen Pflanzenteil, eine Trägerfunktion, mittelbar oder unmittelbar gebunden an das Ankerpeptid und wenigstens einen Wirkstoff zum Schutz der Pflanze und/oder zur Förderung des Pflanzenwachstums. Die Erfindung betrifft ferner die Verwendung eines erfindungsgemäßen Pflanzenschutz- und/oder Pflanzenwachstumsförderungssystems zur Immobilisierung eines Wirkstoffes zum Schutz der Pflanze und/oder zur Förderung des Pflanzenwachstums. Außerdem betrifft die Erfindung ein Verfahren zum Pflanzenschutz und/oder zur Förderung des Pflanzenwachstums, wobei das erfindungsgemäße Pflanzenschutz- und/oder Pflanzenwachstumsförderungssystem auf eine Pflanze aufgebracht wird.

Aufgrund der steigenden Weltbevölkerung besteht ein erhöhter Bedarf an Nahrungsmitteln und anderen pflanzlichen Produkten. Gleichzeitig stellt das Einbringen von Dünge- und Pflanzenschutzmitteln eine zunehmende Belastung der Böden, des Grundwassers und der Umwelt dar. Zudem ist es auch aus Kostengründen wünschenswert, den Einsatz von Pflanzenschutz- und Pflanzenwachstumsförderungsmitteln so zu steuern, dass sie so gezielt wie möglich eingesetzt werden, so dass tatsächlich nur möglichst geringe Mengen benötigt werden. Hinzu kommt, dass ein Überangebot an bestimmten Mitteln dem Pflanzenschutz beziehungsweise dem Pflanzenwachstum nicht förderlich sein kann.
Im Stand der Technik sind antimikrobielle Peptide bekannt, so zum Beispiel beschrieben in Yeaman, M.R. and Yount N.Y. (2003), Pharmacol Rev. 55: 27, Seiten 27 bis 55).
Ferner sind aus dem Stand der Technik Ankerpeptide bekannt, die an bestimmten Oberflächen eine verbesserte Anhaftung vermitteln können, vergleiche z. B.: Muhammad N, Dworeck T, Schenk A, Shinde P, Fioroni M, Schwaneberg U. (2012). Polymersome surface decoration by an EGFP fusion protein employing Cecropin A as peptide "anchor". J Biotechnol., 2012, Jan, 31-37.

Bekannt sind auch Systeme bestehend aus einem Ankerpeptid, das sogenannte "cargo complexe" z.B. Wirkstoffe, mit Nanopartikeln verbindet, sowie deren Anwendung in Säugetieren und Pflanzen (siehe WO 2009/151788). Es ist im Stand der Technik aber kein Systembekannt mit dem flexibel angepasst an eine Vielzahl von Pflanzenoberflächen zuverlässig und insbesondere auch gegenüber Regen mit erhöhter Haftungsdauer Mittel zur positiven Beeinflussung der Pflanzengesundheit und/oder des Pflanzenwachstums aufgebracht werden können.
Vor diesem Hintergrund war es die Aufgabe der vorliegenden Erfindung, ein System für Pflanzenschutz- und/oder Pflanzenwachstumsförderung anzugeben, bei dem die Wirkstoffe, die für die Pflanze vorgesehen sind, mit einer verbesserten Haftung auf Pflanzen aufgebracht werden können.
Diese Aufgabe wird durch ein Pflanzenschutz- und/oder Pflanzenwachstumsförderungssystem, umfassend wenigstens ein Ankerpeptid zur erhöhten Bindung an einen Pflanzenteil, eine Trägerfunktion, mittelbar oder unmittelbar gebunden an das Ankerpeptid und einen Wirkstoff zum Schutz der Pflanze und/oder zur Förderung des Pflanzenwachstums insbesondere auch des Ertrags.
Unter Pflanzenschutz sind im Sinne dieser Anmeldung sämtliche Maßnahmen zu verstehen, die eine Pflanze vor Krankheit und/oder Schädlingen schützt. Zusätzlich kann unter Pflanzenschutz noch der Schutz vor abiotischem Stress wie z. B. Trockenheit verstanden werden.
Unter Pflanzenwachstumsförderung ist jede Maßnahme zu verstehen, die eine Pflanze unterstützt, mehr Biomasse zu produzieren. Dies betrifft insbesondere auch eine Ertragssteigerung bei Nutzpflanzen.

Ein Ankerpeptid im Sinne der vorliegenden Erfindung ist ein Polypeptid (einschließlich eines Oligopeptides), das eine erhöhte Bindung des mit ihm verbundenen Restmoleküls an einem Pflanzenteil bewirkt.

Bevorzugte Ankerpeptide sind insbesondere amphiphile Kettenabschnitte mit Größen von 2 bis 300 weiter bevorzugt 10 bis 200, und besonders bevorzugt 15 - 150 Aminosäuren, die strukturell und von der Zusammensetzung hochdivers sein können. Bevorzugte Strukturen sind dabei Alpha-Helix, Beta-Faltblatt und/oder Regionen mit erhöhter Anzahl von spezifischen Aminosäuren, insbesondere Prolin oder Tyrosin und/oder Kombination aus Alpha-Helix und Beta-Faltblatt-Strukturen.

Eine erhöhte Bindung im Sinne der vorliegenden Erfindung ist eine Bindung, die bewirkt, dass von dem aufgebrachten Wirkstoff (siehe auch weiter unten) im Abwaschtest: gemäß Beispiel 1 um wenigstens 50%, bevorzugt wenigstens 60%, weiter bevorzugt wenigstens 70%, noch weiter bevorzugt wenigstens 80% und besonders bevorzugt wenigstens 90% mehr auf einer Pflanze oder einem Pflanzenteil verbleibt als als der gleiche Wirkstoff, der ohne das Ankerpeptid aufgebracht wird. Dabei sind die genannten %-Werte auf die Zahl der Wirkstoffmoleküle bezogen.

Eine Trägerfunktion im Sinne der vorliegenden Erfindung ist ein Bereich des erfindungsgemäßen Pflanzenschutz- und/oder Pflanzenwachstumsförderungssystems, der weder bindende Funktion an die Zielstruktur der Pflanze noch eine Wirkstofffunktion ausübt.

Ein Wirkstoff im Sinne der vorliegenden Erfindung ist eine natürliche oder synthetische Verbindung, ein biologisches System bis hin zu einem Mikroorganismus, die jeweils eine Wirkung auf Wachstum und/oder Gesundheit der Pflanze ausüben. Im Sinne der vorliegenden Erfindung ist der Wirkstoff an die Trägerfunktion direkt gebunden, wobei die Bindung in Form einer chemischen oder einer physikalischen Bindung vorliegen kann. Unter physikalische Bindung im Sinne des vorliegenden Textes fällt auch, wenn der Wirkstoff von der Trägerfunktion eingeschlossen ist.

Die erfindungsgemäße Lösung stellt also ein wenigstens dreiteiliges System dar. Das Ankerpeptid dient dazu, den Wirkstoff an die Pflanze zu binden. Dadurch wird bewirkt, dass die Verweildauer des Wirkstoffs an der Pflanze erhöht wird. Außerdem ist es möglich, durch die Auswahl eines entsprechenden Ankerpeptids den genauen Wirkort an der Pflanze, zum Beispiel das Pflanzenteil, festzulegen. Somit ist es möglich, gleich einem Baukastensystem, das Ankerpeptid für bestimmte Pflanzen und Pflanzenteile entsprechend auszuwählen. Eine solche Auswahl ist dem Fachmann anhand bekannter Ankerpeptide sowie mittels einer entsprechenden Anpassung der Polypeptidkette für das Ankerpeptid an den gewünschten Zweck möglich. Bevorzugt ist das Ankerpeptid so ausgestaltet, dass es an eine hydrophobe Oberfläche einer Pflanze bindet. Hydrophobe Oberfläche bedeutet in diesem Zusammenhang im Zweifelsfall, dass ein Wassertropfen gegenüber einer hydrophoben Oberfläche einen Kontaktwinkel von ≥ 65°, bevorzugt ≥ 70°, weiter bevorzugt ≥ 75°, noch weiter bevorzugt ≥ 80°, wiederum weiter bevorzugt ≥ 85° und besonders bevorzugt ≥ 90° bei einer statischen Messung aufweist.

Die Trägerfunktion dient dazu, den Wirkstoff mit dem Ankerpeptid zu verbinden und gegebenenfalls ihn zusätzlich zu immobilisieren. Auch die Trägerfunktion kann entsprechend den Bedürfnissen des eingesetzten erfindungsgemäßen Systems angepasst werden. Dies gilt sowohl für den Wirkstoff, als auch für die Bindung an das Ankerpeptid sowie die gewünschte Wirkweise des Wirkstoffes. So kann es als Beispiel wünschenswert sein, dass der Wirkstoff in einer gewissen Entfernung von der Pflanzenoberfläche verbleibt. Dies gilt insbesondere für Wirkstoffe, die zur Abwehr von Schadorganismen dienen sollen. Dabei trennt die Trägerfunktion regelmäßig die Funktion von Ankerpeptid Wirkstoff räumlich.

Bevorzugt im Sinne der vorliegenden Erfindung ist, dass das Ankerpeptid aus 2 bis 300 Aminosäuren, weiter bevorzugt aus 2 bis 250, noch weiter bevorzugt aus 2 bis 180, noch weiter bevorzugt aus 5 bis 140 und besonders bevorzugt aus 10 bis 100 Aminosäuren besteht. Besonders bevorzugte Ankerpeptide in diesem Zusammenhang sind Peptidsequenzen, die den Sequenzen SEQ 1 bis 48 oder Sequenzen mit einer wenigstens 30%igen, bevorzugt wenigstens 50%igen, bevorzugt wenigstens 65%igen, bevorzugt wenigstens 75%igen Übereinstimmung, bevorzugt wenigstens 80%igen Übereinstimmung und weiter bevorzugt wenigstens 90%igen Übereinstimmung mit den Sequenzen SEQ 1 bis 48 entsprechen.

Zum Ankerpeptid zählen die Aminosäuren, die an dem, dem Wirkstoff entgegengesetzten Ende des erfindungsgemäßen Pflanzenschutz- und/oder Pflanzenwachstumsförderungssystems (dieses ist bevorzugt unverzweigt) vorgesehen sind. Dabei zählen im Sinne der vorliegenden Erfindung zu den Aminosäuren des Ankerpeptids alle Aminosäuren an diesem Ende bis zu der letzten Aminosäure, die an den Pflanzenteil bindet. Sofern hinter der genannten Aminosäure (also in der Aminosäurenkette vom Wirkstoff weggerichtet) nicht bindende Aminosäuren liegen (also solche, die am Bindungsvorgang an die Pflanze keinen Anteil haben), zum Beispiel in Form von Loops oder ähnlichem, so ist es im Sinne der vorliegenden Erfindung bevorzugt, dass diese nicht-bindenden Kettenabschnitte dann nicht zu der Gesamtzahl der Aminosäuren des Ankerpeptids gezählt werden, wenn die nichtbindende Kette aus wenigstens 15 aufeinanderfolgenden, nicht mit der Pflanzenoberfläche in Kontakt stehenden Aminosäuren besteht.

Bevorzugt ist ein erfindungsgemäßes Pflanzenschutz- und/oder Pflanzenwachstumsförderungssystem, wobei der Wirkstoff ausgewählt ist aus der Gruppe bestehend aus
- Pestizid, insbesondere Akarizid, Ovizid, Insektizid, Molluskizid, Nematizid, Rodentizid und/oder Avizid,
- Herbizid, insbesondere Algizid, Graminizid und/oder Arborizid
- Bakterizid
- Fungizid
- Safener
- Nutzorganismen, insbesondere Nutzbakterien (z.B. "plant growth-promoting rhizobacteria" wie z.B. Bacillus-Arten) und Nutzpilze (z.B. Trichoderma-Arten, Mycorrhiza-Pilze), die die Pflanzenwurzel besiedeln und/oder in der Rhizosphäre wachsen und sich gegebenenfalls positiv auf die Widerstandsfähigkeit, die Krankheitsresistenz, das Wachstum und/oder den Ertrag von Pflanzen auswirken
- Mittel zur Förderung des Wachstums und/oder der Ansiedlung von Nutzorganismen und
- Pflanzenwachstumsmittel, insbesondere Nährstoffe oder Hormone.

Besonders bevorzugte Wirkstoffe für die vorliegende Erfindung sind Strobilurin-Fungizide, Azole, Succinatdehydrogenase-Inhibitoren und antimikrobielle Peptide, insbesondere Thanatin, Osmotin, Dermaseptin SI, Metcheninkowin, Defensine und antimikrobielle Proteine, insbesondere pathogenesis-related (PR) proteins, Osmotin, Phylloplanine oder GDSL-Lipasen

Bevorzugt ist ein erfindungsgemäßes Pflanzenschutz- und/oder Pflanzenwachstumsförderungssystem, wobei die Trägerfunktion ausgewählt ist aus der Gruppe bestehend aus Nanogel, Mikrogel, Polysom, Polymerosom, Synthosom, Polyaminosäure-Spacer, Kolloidosom und Kubosom.

Die Trägerfunktion kann direkt und indirekt an das Ankerpeptid gebunden sein. Sofern die Trägerfunktionen ein Nanogel/Mikrogel ist, ist es bevorzugt, dass die Trägerfunktion indirekt an das Ankpeptid gebunden ist. Dies bedeutet, dass es bevorzugt ist, dass in solchen Fällen zusätzlich noch ein weiterer Spacer eingesetzt wird.

Ein Spacer im Sinne dieser Erfindung ist ein (zusätzliches) Element (bevorzugt eine Polypetidkette) die für eine Beabstandung zwischen Trägerfunktion und Ankerpeptid sorgt. Bevorzugt ist ein Spacer in Form einer starren Alphahelix ausgebildet. Ganz besonders bevorzugt ist ein solcher Spacer ein Polyalanin.

Wie weiter oben beschrieben ist an die Trägerfunktion physikalisch oder chemisch der Wirkstoff gebunden. Bevorzugt wird die Trägerfunktion durch ein Nanogel oder ein Mikrogel dargestellt. Nanogele und Mikrogele sind vernetzte Polymerteilchen, die in Wasser gequollen sind. Nanogele besitzen dabei Teilchen in einer Größe von 50 nm bis 200 nm (bezogen auf das statistische Mittel der Teilchengröße, wobei im Zweifelsfall der größte Durchmesser für nicht-sphärischen Teilchen in die Größenbestimmung eingeht, Mikrogele im Sinne im Sinne des vorliegenden Textes besitzen eine Teilchengröße von >200 nm bis 50 µm, ebenfalls bezogen auf das statistische Mittel, wobei bei nicht-sphärischen Teilchen der größte Durchmesser in die Bestimmung eingeht.

Besonders bevorzugte Träger für die vorliegende Erfindung sind Mikrogele mit einer Teilchengröße (statistisches Mittel, bestimmt wie oben) mit einer Teilchengröße von 1 µm bis 10 µm. Solche besonders bevorzugten Mikrogele sind in der Herstellung gut handhabbar und bieten genügend Kapazität für Wirkstoff für das erfindungsgemäße Pflanzenschutz- und/oder Pflanzenwachstumsförderungs-system. Mikrogele besitzen spezielle Eigenschaften durch poröse offene Struktur und wasser-solvatisierte Polymerketten, die auf externe Stimuli (wie z. B. Temperatur, pH, oder Licht) reagieren können. pHresponsive Mikrogele besitzen saure oder basische Gruppen in den Polymerketen. Je nach pH-Wert werden diese Gruppen reversibel protoniert / deprotoniert und führen zu Volumenänderungen bei den Gelen. Diese Funktion ermöglicht eine pH-gesteuerte Freisetzung von Ionen oder Molekülen aus den Gelen.

Grundsätzlich klassische Freisetzungssysteme aus Mikrogelen sind Kapseln. Andere Freisetzungssysteme sind z. B. Vesikel, Koloidosome oder Kubosome.

Bevorzugt ist ein erfindungsgemäßes Pflanzenschutz- und/oder Pflanzenwachstumsförderungssystem, wobei das Ankerpeptid bindet am Blatt, Stamm, Stängel, Wurzel, Frucht, insbesondere Saatgut, Knospe, Blüte und/oder Knolle einer Pflanze. In diesem Zusammenhang ist es bevorzugt, an das Ankerpeptid an eines der genannten Pflanzenteile um wenigstens 10 %, bevorzugt 20 %, und besonders bevorzugt 30 % stärker bindet als an die anderen Pflanzenteile. Stärker bindet heißt in diesem Zusammenhang wiederum, dass in dem Abwaschtest gemäß Beispiel 1 entsprechend den genannten Prozentzahlen weniger des Wirkstoffes von dem "Zielpflanzenteil" abgewaschen wird, als von allen anderen Pflanzenteilen.

Bevorzugt ist ein erfindungsgemäßes Pflanzenschutz- und/oder Pflanzenwachstumsförderungssystem, wobei die Trägerfunktion ein Nano- oder Mikrogel und so ausgestattet ist, dass der Wirkstoff entweder am Träger verbleibt oder direkt, zeitverzögert und/oder stimulationsabhängig abgegeben wird. Dabei ist eine zeitverzögerte und/oder stimulationsabhängige Abgabe besonders bevorzugt.

Beim Einsatz von Nano- oder Mikrogelen ist es - wie oben angedeutet - Stand der Technik, diese Gele so auszugestalten, dass sie auf entsprechende Stimuli reagieren können. Bevorzugte Stimuli, auf die die Mikro- oder Nanogele reagieren sind abiotische Parameter wie zum Beispiel pH Wert, Temperatur, Feuchte, Licht (einschließlich UV-Licht), Bestrahlungsdauer elektrische Impulse oder magnetische Impulse und biotische Faktoren, wie Elizitoren, enzymatische Reaktionen, Mikroben-assoziierte molekulare Muster (microbe associated molecular pattern), Pathogen-assoziierte molekulare Muster (pathogen associated molecular pattern), Verwundungs-assoziierte molekulare Muster (damage associated molecular pattern) und Insekten-assoziierte molekulare Muster (herbivore associated molecular pattern).

Bevorzugt ist ein erfindungsgemäßes Pflanzenschutz und/oder Pflanzenwachstumsförderungssystem, wobei das System ein Fusionsprotein ist.

Bei einem Fusionsprotein würde das Ankerpeptid, die Trägerfunktion und bevorzugt auch der Wirkstoff jeweils aus Peptiden bestehen. Wie bereits oben angedeutet sind im Stand der Technik eine Reihe von (Poly-)Peptiden bekannt, die beispielsweise antimikrobielle Eigenschaften besitzen. Ein solches Fusionsprotein hätte den Vorteil, dass es großtechnisch leicht herstellbar ist und insbesondere eine die Umwelt nicht belastende Wirkung entfalten kann.

Bevorzugt ist ein erfindungsgemäßes Pflanzenschutz- und/oder Pflanzenwachstumsförderungssystem, insbesondere in Form eines Fusionsproteins, wobei die Trägerfunktion eine Kette aus 2 bis 100 Aminosäuren bevorzugt 5 bis 50 Aminosäuren darstellt, die als Spacer (Platzhalter) ausgestaltet sind.

Teil der Erfindung ist auch die Verwendung eines erfindungsgemäßen Pflanzenschutz- und/oder Pflanzenwachstumsförderungssystems zur Immobilisierung eines Wirkstoffs zum Schutz der Pflanze und/oder zur Förderung des Pflanzenwachstums.

Unter Immobilisierung im Sinne der vorliegenden Erfindung ist dabei eine Bindung an die Pflanze im Sinn der oben beschriebenen Definition zu verstehen.

Teil der Erfindung ist auch ein Verfahren zum Pflanzenschutz und/oder zur Förderung des Pflanzenwachstums, umfassen die Schritte:
a) Bereitstellen eines erfindungsgemäßen Pflanzenschutz- und/oder Pflanzenwachstumsförderungssystems und
b) Aufbringen des Pflanzenschutz- und/oder Pflanzenwachstumsförderungssystems auf eine Pflanze.

### Beispiele

### Beispiel 1 - Abwaschtest

Der Abwaschtest dient zur Prüfung, ob durch das Ankerpeptid eine verbesserte Bindung des erfindungsgemäßen Pflanzenschutz- und/oder Pflanzenwachstumsförderungssystems aufgrund des Ankerpeptids erfolgt:
1. Zur Verfügung gestellt wird das zu prüfende Pflanzenschutz- und/oder Pflanzenwachstumsförderungssystem (Probe) und Moleküle der gleichen Zusammensetzung, bei denen der Bereich des Ankerpeptides jedoch nicht vorhanden ist (Vergleichsprobe).
2. Durchführung
   a) Es erfolgt eine Inkubation für fünf Minuten bei Raumtemperatur auf dem zu prüfenden Pflanzenteil für die Probe und die Vergleichsprobe.
   b) Nachfolgend wird dreimal für jeweils fünf Minuten mit Tris/HCl Puffer 50 mM Tris/HCl buffer, pH 8.0 gewaschen.
   c) Nachfolgend wird die Konzentration der Probe und der Vergleichsprobe auf den jeweiligen Pflanzenteil mit einem geeigneten Nachweisverfahren festgestellt.

Eine verbesserte Bindung im Sinne der vorliegenden Erfindung liegt zumindest dann vor, wenn von der Probe wenigstens 50% mehr als von der Vergleichsprobe auf der Pflanze verbleibt. Sofern erforderlich, ist die Testpflanze im Zweifelsfall eine Sojabohnenpflanze (*Glycine max*) oder eine Maispflanze (*Phocea*) *oder Weizen (Triticum* L).

Bevorzugt sind die genannte Sojabohnenpflanzen und die genannte Maispflanze die Testpflanzen (als Beispiel für ein- und zweikeimblättrige Pflanzen).

Im Zweifelsfall werden alle Pflanzenteile der Vergleichspflanze getestet, ob an einem der Pflanzenteile eine erhöhte Bindung vorliegt. Hier sind insbesondere als Pflanzenteile zu nennen: Blatt, Blattstamm, Stamm, Stängel, Wurzel, Frucht, Knospe und Blüte.

Eine erhöhte Bindung im Sinne der vorliegenden Erfindung liegt also bevorzugt dann vor, wenn die Probe, verglichen mit der Vergleichsprobe im Abwaschtest, bei wenigstens einem der genannten Pflanzenteile zu wenigstens 50% weniger abgewaschen wird.

### Beispiel 2 - bevorzugte Ankerpeptide

**Tabelle 1**

| **Mögliche Ankerpeptidsequenzen:** | | |
|---|---|---|
| **Peptid** | **Aminosäuresequenz** | |
| Antifungal protein 1 | AGCIKNGGRCNASAGPPYCCSSYCFQIAGQSYGVCKNR | SEQ 1 |
| Cg-Def | | SEQ 2 |
| Dermaseptin DA4 | GMWSKIKNAGKAAKAAAKAAGKAALGAVSEAM | SEQ 3 |
| Defensin | | SEQ 4 |
| hDermcidin | | SEQ 5 |
| Pelovaterin | | SEQ 6 |
| Thanatin | GSKKPVPIIYCNRRTGKCQRM | SEQ 7 |
| Androctonin | RSVCRQIKICRRRGGCYYKCTNRPY | SEQ 8 |
| TAP_20_N | NPVSCVRNKGICVPIRCPGNMKQIGTCVGRAVKCCRKK | SEQ 9 |
| PgD5 | | SEQ 10 |
| Alpha-purothionin | | SEQ 11 |
| Carnobacteriocin B2 | | SEQ 12 |
| MMGP1 | MLWSASMRIFASAFSTRGLGTRMLMYCSLPSRCWRK | SEQ 13 |
| Macaque histatin | | SEQ 14 |
| MiAMP1 | | SEQ 15 |
| MBP-1 | RSGRGECRRQCLRRHEGQPWETQECMRRCRRRG | SEQ 16 |
| RNase 7 | | SEQ 17 |
| Shepherin I | GYGGHGGHGGHGGHGGHGGHGHGGGGHG | SEQ 18 |
| Snakin-1 | | SEQ 19 |
| Stomoxyn | | SEQ 20 |
| VarvF | GVPICGETCTLGTCYTAGCSCSWPVCTRN | SEQ 21 |
| VrD1 | | SEQ 22 |
| European bumblebee abaecin | | SEQ 23 |
| Papiliocin | RWKIFKKIEKVGRNVRDGIIKAGPAVAVVGQAATVVK | SEQ 24 |
| BM Moricin | AKIPIKAIKTVGKAVGKGLRAINIASTANDVFNFLKPKKRKA | SEQ 25 |
| Carnocyclin A | | SEQ 26 |
| Curvacin A | | SEQ 27 |
| Lactoferricin B | FKCRRWQWRMKKLGAPSITCVRRAF | SEQ 28 |
| Magainin 2 | GIGKFLHSAKKFGKAFVGEIMNS | SEQ 29 |
| Pleurocidin | GWGSFFKKAAHVGKHVGKAALTHYL | SEQ 30 |
| Psoriasin | | SEQ 31 |
| Spinigerin | HVDKKVADKVLLLKQLRIMRLLTRL | SEQ 32 |
| Acanthoscurrin 1 | | SEQ 33 |
| ALF-L | | SEQ 34 |
| BDEF_TACTR | | SEQ 35 |
| PP102 | GSCSCSGTISPYGLRTCRATKTKPSHPTTKETHPQTLPT | SEQ 36 |
| Tachystatin A2 | | SEQ 37 |
| CecropinA-Magainin2 | KWKLFKKIKFLHSAKKF | SEQ 38 |
| Plantaricin A | KSSAYSLQMGATAIKQVKKLFKKWGW | SEQ 39 |
| Ocellatin-F1 | GVVDILKGAAKDIAGHLASKVMNKL | SEQ 40 |
| PgD5 | | SEQ 41 |
| TAP 20N | NPVSCVRNKGICVPIRCPGNMKQIGTCVGRAVKCCRKK | SEQ 42 |
| Androctonin | RSVCRQIKICRRRGGCYYKCTNRPY | SEQ 43 |
| Adenoregulin | GLWSKIKEVGKEAAKAAAKAAGKAALGAVSEAVQ | SEQ 44 |
| Cathelicidin-BF | KFFRKLKKSVKKRAKEFFKKPRVIGVSIPF | SEQ 45 |
| Cecropin A | KWKLFKKIEKVGQNIRDGIIKAGPAVAWGQATQIAK | SEQ 46 |
| LcI | | SEQ 47 |
| Reutericin-6 | | SEQ 48 |

Die genannten Ankerpeptide eignen sich besonders gut für die erfindungsgemäßen Pflanzenschutz- und/oder Wachstumsförderungssysteme. Hierbei wird die Bindung des Ankerpeptides an das Restmolekül (insbesondere direkt oder indirekt an den Träger) vom Fachmann nach dem Stand der Technik vorgenommen werden.

### Beispiel 3

Allgemeines Protokoll für die Expression eines erfindungsgemäßen Pflanzenschutz- und/oder Pflanzenwachstumsförderungssystems in Form eines Fusionsproteins:

### Prinzip: Expression von Fusionsproteinen in kleinen Mengen:

Das Gen, das das erfindungsgemäße Pflanzenschutz- und/oder Pflanzenwachstumsförderungssystem einschließlich des Ankerpeptides kodiert, wird in einen pET28 Expressionsvektor eingebracht. Der Expressionsstamm ist *E.coli* BI21-Gold.

### Vorgehensweise:

1. Plattieren der E.coli auf einer Agarplatte. Wachstum über Nacht bei 37°C.
2. Entnahme einer einzelnen Kolonie von der Platte, um eine Präkultur von 10 ml LBKan Medium anzuimpfen, Inkubieren über Nacht bei 37°C mit 200 rpm.
3. Herstellen von 10 ml TB-Medium (80 ml Lösung A + 20 ml Lösung B) pro Stamm, Hinzufügen von Kanamycin.
4. Prüfen des OD₆₀₀ der Vorkultur; Animpfen der Hauptkultur mit x ml Vorkultur, x = 2,5/OD_{Präkultur}.
5. Prüfen des OD₆₀₀ der Hauptkultur (Ziel mindestens 0,025).
6. Inkubieren der Hauptkultur bei 37°C, 200 rpm, für 4 Stunden.
7. Hinzugabe 100 µL 0,1 M IPTG.
8. Inkubieren der Hauptkultur bei 16 °C , 200 rpm für 48 Stunden.
9. Ernten der Zellen durch Zentrifugation 30 min bei 4°C, 4000 rpm (Eppendorf 5810 R)
10. Die Zellen können bei -20 °C bis zur Verwendung aufbewahrt werden.

Die Chemikalien werden von Sigma Aldrich bezogen.

Die eingesetzten Lösungen im Einzelnen:
LB-Medium: Trypton (10 g/L), Hefeextrakt (5 g/L) NaCl (10 g/L)

Das LB-Medium wird zwanzig Minuten bei 121°C autoklaviert.

Für 100 ml LB-Medium der Vorkultur (LBKan) wurden 100 µL steril filtriertes Kanamycinsulfat (100 mg/mL in ddH2O) hinzugefügt.

### TB-Medium:

### Lösung A:

Pepton 12 g, Hefeextrakt 24 g, Glycerol 4 g, auf 800 ml mit dH₂O aufgefüllt und zwanzig Minuten bei 121 °C autoklaviert.

### Lösung B:

K₂HPO₄ 12, 5 g und KH₂PO₄ 2,31 g wurden auf 200 ml dH₂O aufgefüllt und zwanzig Minuten bei 121°C autoklaviert.

Zur Herstellung von TB-Medium mit Kanamycin (TBkan) wurden zu 200 ml TB-Medium 100 µL steril filtriertes Kanamycinsulfat (100 mg/ml in ddH2O) hinzugefügt.

### Beispiel 4 - Reinigung von Fusionsproteinen:

Mittels Affinitätschromatographie werden Proteine auf Basis einer reversiblen Wechselwirkung zwischen einem Protein und einem spezifischen Liganden, der an eine Chromatographiematrix gebunden ist, getrennt. Diese Technik bietet hohe Selektivität, hohe Auflösung und üblicherweise eine große Kapazität für das Protein von Interesse.

Die Technik kann verwendet werden, um aktive Biomoleküle von denaturierten oder funktionell veränderten Formen zu separieren oder reine Substanzen zu isolieren, die in geringer Konzentration in großen Volumina von Rohproben sind oder um spezifische Verunreinigungen zu entfernen.

### Vorgehensweise:

1. Ein Zellpellet (beispielsweise eines aus Beispiel 3) wird mit Puffer A (siehe unten), der mit 0,1 mM PMSF und 0,1 mM DTT direkt vor der Verwendung versetzt wurde, aufgenommen. Dabei werden 6 mL/g Zellen eingesetzt.
2. Der Zellaufschluss erfolgt in einem Hochdruckhomogenisator, 3 Mal bei 1500 bar.
3. Nachfolgend wird 15 min. bei 4°C und 4000 rpm zentrifugiert.
4. Es folgt eine Zentrifugierung für 30 min. bei 4°C und 10.000 rpm (Sorvall Centrifuge). Wenn der Überstand nicht klar ist, wird nochmals zu gleichen Bedingungen für 15 min. zentrifugiert.
5. Nachfolgend wird der Überstand mit 0,45 µm Celluloseacetat-Membranfiltern (nicht steril) (VWR) filtriert.
6. Es erfolgt eine Aufreinigung über den His-tag mittels ÄKTA prime und einer NiNTA-Säule (5mL).
7. Equilibrierung der Säule:
   - Die Säule wird 5 Mal mit ddH2O gewaschen
   - Röhrchen B wird mit Puffer B (siehe unten) gefüllt
   - Röhrchen A wird mit Puffer A gefüllt und dann in die Säule mit 2 bed Volumen Puffer A (0% Puffer B) gewaschen
8. Aufgeben des klaren Überstands:
   - Eine Fließrate von 2 mL/min. bei einem maximalen Druck von 0,6 MPa wird eingestellt
   - Die Säule wird mit Puffer A equilibriert
   - Der Startgradient ist 100 mL 0 - 50% Puffer B
   - Die Eluate werden in 2 - 5 mL Fraktionen gesammelt
   - Die Fraktionen werden mittels SDS-Page geprüft
   - Es wird gegen Puffer C bei 4°C für 24 Stunden dialysiert
   - Die Reinheit wird mittels SDS-Page bestimmt und die Konzentration mittels BCA-assay
   - Es werden 0,1 mM PMSF, 0,1 mM DTT und EDTA - Lösung hinzugegeben
   - Die Lösung wird optional bei -20°C eingefroren
   - und optional nachfolgend lyophilisiert
   - Das lyophilisierte Fusionsprotein ist bei -20°C lagerbar

**Hinweise:** Die Chemikalien stammen jeweils von Sigma Aldrich, eingesetzt wurde ÄKTA prime.

### Lösungen:

Puffer A (50 mM Tris-Puffer, 5 mM Imidazol pH 8,0): Es werden 4,44 g/L Tris HCl, 2,65 g/L Tris-Base und 0,34 g/L Imidazol mit dH₂O verdünnt.

Puffer B (50 mM Tris-Puffer, 500 mM Imidazol, pH 8,0): Es werden 4,44 g/L Tris HCl und 2,65 g/L Tris-Base und 34,04 g/L Imidazol in dH₂O gemischt.

Puffer C (50 mM Tris-Puffer, pH 8,0): Es werden 4,44 g/L Tris HCl und 2,65 g/L Tris-Base mit dH₂O verdünnt.Beispiel 5

Modell für ein erfindungsgemäßes Pflanzenschutz- und/oder Pflanzenwachstumsförderungssystem:
In diesem Modell ist zur verbesserten Nachweisbarkeit der Wirkstoff (zum Beispiel ein antimikrobielles Peptid) durch eGFP ersetzt.

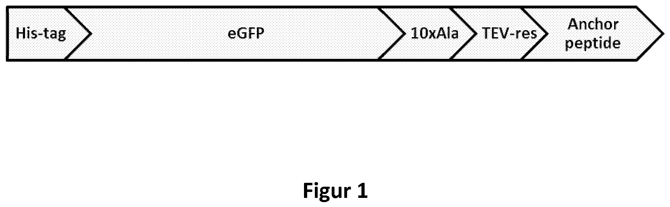

Figur 1 zeigt schematisch die Polypeptidkette eines erfindungsgemäßen Fusionsproteins. Dabei bedeutet "Anchor peptide" Ankerpeptid.
Das erfindungsgemäße Pflanzenschutz- und/oder Pflanzenwachstumsförderungssystem besteht aus einem His-tag für die Aufreinigung (optional), einem Teil grün fluoreszierendes Protein (eGFP) als Modell für den Wirkstoff und für einen vereinfachten Nachweis der Trägerfunktion in Form eines 10xAlanin Spacers mit optionaler Proteaseschnittstelle (TEV) (10xAla-TEV) sowie dem Ankerpeptid entweder Cecropion A (CecA) oder LCI.
Die dazugehörigen Aminosäuresequenzen sind wie folgt:
**SEQ 50:** His-eGFP-10xAla-TEV-CecA
**SEQ 51:** His-eGFP-10xAla-TEV-LCI
Dabei stellt die **SEQ 52** MGSSHHHHHHSSGLVPRGSH, den His-tag,
Die **SEQ 53**MVSKGEELFTGVVPILVELDGDVNGHKFSVSGEGEGDATYGKLTLKFICTTGKLPVPWPTLVTTLTYGVQCFSRYPDMKQHDFFKSAMPEGYVQERTIFFKDDGNYKTRAEVKFEGDTLVNRIELKGIDFKEDGNILGHKLEYNYNSHNVYIMAKQKNGIKVNFKIRHNIEDGSVQLADHYQQNTPIGDGPVLLPDNHYLSTQSALSKDPNEKRDHMVLLEFVTAAGITLGMDELYK das eGFP,
die **SEQ 54** AAAAAAAAAA den Alanin Spacer und
die **SEQ 55** ENLYFQG die TEV-Schnittstelle dar. Der Rest der Sequenz ist die CecA - oder die LCI Sequenz (vgl. Beispiel 2).

### Beispiel 6

### Anwendungsbeispiel des Modell-Fusionsproteins:

Die DNA-Sequenz des für das Modell-Fusionsprotein wurde in einen pET28 Expressionsvektor eingebracht und gemäß Beispiel 3 exprimiert. Nach dem Gewinnen und Aufreinigen der Fusionsproteine (vgl. Beispiel 4) wurden diese auf Sojablätter aufgebracht.

Als Probe wurde das Fusionsprotein gemäß SEQ 51 (LCI-eGFP) in einer Konzentration von 1 mg/mL und als Vergleichsprobe die gleiche Sequenz ohne die Ankerpeptidsequenz, ebenfalls exprimiert analog zu Beispiel 3, eingesetzt. Auch die Vergleichsprobe wurde in einer Konzentration von 1mg/mL aufgebracht.

Die Inkubation erfolgte entsprechend dem Abwaschtest, vgl. Beispiel 1. Nach der Durchführung des Abwaschtestes gemäß Beispiel 1, zeigten sich im Fluoreszenzmikroskop nur auf dem mit der Probe (Modell-Fusionsprotein) behandelten Sojablatt eine Vielzahl von Fluoreszenzsignalen, während auf dem mit der Vergleichsprobe behandelten Blatt keine Fluoreszenz mehr feststellbar war.

### Beispiel 7

Beispiel für bindende Ankerpeptidsequenzen mit einer Sequenzvarianz der LCI-Sequenz:
**SEQ 56** (LCI WT)
   AIKLVQSPNGNFAASFVLDGTKWIFKSKYYDSSKGYWVGIYEVWDRK
**SEQ 57** (LCI KR1)
   AIKLVQSLNGNFAARFVLDGTKWIFKCKYYDSSKGYWVGIYEVWGRK
**SEQ 58** (LCI KR2)
   AIRLVQSQKCNFAASFVLGGTKWTFKGKYYDSSKDYWVGIYEVRVRK
SEQ **59** (LCI KR3)
   AIKQVQSPNGNFAASFVLDGTKWIFKSKYYDSSRGYWVGIYVVWDRK
SEQ **60** (LCI KR4)
   AIKLVHSPNGNFAASFVLDGTKWIFKSKFYDSSKGYWVGTYEVWARK

## Patentansprüche

1. Pflanzenschutz- und/oder Pflanzenwachstumsförderungssystem, umfassend wenigstens ein Ankerpeptid zur erhöhten Bindung an ein Pflanzenorgan oder einen Pflanzenteil, eine Trägerfunktion, mittelbar oder unmittelbar gebunden an das Ankerpeptid und einen Wirkstoff zum Schutz der Pflanze und/oder zur Förderung des Pflanzenwachstums und/oder des Ertrags, wobei der Wirkstoff physikalisch oder chemisch an die Trägerfunktion gebunden ist.

2. Pflanzenschutz- und/oder Pflanzenwachstumsförderungssystem nach Anspruch 1, wobei das Ankerpeptid aus 2 bis 300 Aminosäuren besteht.

3. Pflanzenschutz- und/oder Pflanzenwachstumsförderungssystem nach Anspruch 1 oder 2, wobei der Wirkstoff ausgewählt ist aus der Gruppe bestehend aus
- Pestizid, insbesondere Akarizid, Ovizid, Insektizid, Molluskizid, Nematizid, Rodentizid und/oder Avizid,
- Herbizid, insbesondere Algizid, Graminizid und/oder Arborizid
- Bakterizid
- Fungizid
- Safener
- Nutzorganismen, insbesondere Nutzbakterien und Nutzpilze, die die Pflanzenwurzel besiedeln und/oder in der Rhizosphäre wachsen.
- Mittel zur Förderung des Wachstums und/oder der Ansiedlung von Nutzorganismen und
- Pflanzenwachstumsmittel, insbesondere Nährstoffe oder Hormone.

4. Pflanzenschutz- und/oder Pflanzenwachstumsförderungssystem nach einem der vorangehenden Ansprüche, wobei die Trägerfunktion ausgewählt ist aus der Gruppe bestehend aus Nanogel, Mikrogel, Polysom, Polymerosom, Synthosom, Polyaminosäure-Spacer, Kolloidosom und Kubosom.

5. Pflanzenschutz- und/oder Pflanzenwachstumsförderungssystem nach einem der vorangehenden Ansprüche, wobei das Ankerpeptid bindet an Blatt, Stamm, Stängel, Wurzel, Frucht, insbesondere Saatgut, Knospe, Blüte, und/oder Knolle einer Pflanze.

6. Pflanzenschutz- und/oder Pflanzenwachstumsförderungssystem nach einem der vorangehenden Ansprüche, wobei die Trägerfunktion ein Nano- oder Mikrogel und so ausgestaltet ist, dass der Wirkstoff entweder am Träger verbleibt, oder direkt, zeitverzögert und/oder stimulationsabhängig abgegeben wird.

7. Pflanzenschutz- und/oder Pflanzenwachstumsförderungssystem nach Anspruch 6, wobei der Stimulus ausgewählt ist aus der Gruppe bestehend aus den abiotischen Parametern pH-Wert, Temperatur, Feuchte, Licht (einschließlich UV-Licht), Bestrahlungsdauer, elektrische Impulse und magnetische Impulse und biotische Faktoren, wie Elizitoren, enzymatische Reaktionen, Mikroben-assoziierte molekulare Muster (microbe associated molecular pattern), Pathogen-assoziierte molekulare Muster (pathogen associated molecular pattern), Verwundungs-assoziierte molekulare Muster (damage associated molecular pattern) und Insekten-assoziierte molekulare Muster (herbivore associated molecular pattern).

8. Pflanzenschutz- und/oder Pflanzenwachstumsförderungssystem nach einem der Ansprüche 1 bis 5, wobei das System ein Fusionsprotein ist.

9. Pflanzenschutz- und/oder Pflanzenwachstumsförderungssystem nach Anspruch 8, wobei die Trägerfunktion ein Spacer aus 2-100 Aminosäuren ist.

10. Verwendung eines Pflanzenschutz- und/oder Pflanzenwachstumsförderungssystems nach einem der vorangehenden Ansprüche zur Immobilisierung eines Wirkstoffs zum Schutz der Pflanze und/oder zur Förderung des Pflanzenwachstums.

11. Verfahren zum Pflanzenschutz und/oder zur Förderung des Pflanzenwachstums, umfassend die Schritte:
a) Bereitstellen eines Pflanzenschutz- und/oder Pflanzenwachstumsförderungssystems nach einem der Ansprüche 1 bis 9 und
b) Aufbringen des Pflanzenschutz- und/oder Pflanzenwachstumsförderungssystems auf eine Pflanze.

## Claims

1. Plant protection and/or plant growth promotion system, comprising at least one anchor peptide for increased binding to a plant organ or a plant part, a support function, which is indirectly or directly bound to the anchor peptide, and an active substance for protecting the plant and/or promoting plant growth and/or yield, wherein the active substance is physically or chemically bound to the support function.

2. Plant protection and/or plant growth promotion system according to claim 1, wherein the anchor peptide consists of 2 to 300 amino acids.

3. Plant protection and/or plant growth promotion system according to claim 1 or 2, wherein the active substance is selected from the group consisting of
- pesticide, in particular acaricide, ovicide, insecticide, molluscicide, nematicide, rodenticide and/or avicide,
- herbicide, in particular algicide, graminicide and/or arboricide,
- bactericide,
- fungicide,
- safener,
- beneficial organisms, in particular beneficial bacteria and beneficial fungi that colonize the plant roots and/or grow in the rhizosphere,
- means for promoting plant growth and/or colonization of beneficial organisms, and
- plant growth agents, in particular nutrients or hormones.

4. Plant protection and/or plant growth promotion system according to any one of the preceding claims, wherein the support function is selected from the group consisting of nanogel, microgel, polysome, polymerosome, synthosome, poly-amino acid-spacer, colloidosome and cubosome.

5. Plant protection and/or plant growth promotion system according to any one of the preceding claims, wherein the anchor peptide binds to a leaf, trunk, stem, root, fruit, in particular seeds, bud, blossom and/or tuber of a plant.

6. Plant protection and/or plant growth promotion system according to any one of the preceding claims, wherein the support function is a nano- or microgel and configured such that the active substance either remains on the support or is directly, time delayed and/or stimulation dependently released.

7. Plant protection and/or plant growth promotion system according to claim 6, wherein the stimulus is selected from the group consisting of the abiotic parameters pH, temperature, humidity, light (including UV light), duration of irradiation, electric pulses and magnetic pulses and biotic factors such as elicitors, enzymatic reactions, microbe associated molecular patterns, pathogen associated molecular patterns, damage associated molecular patterns, and herbivore associated molecular patterns.

8. Plant protection and/or plant growth promotion system according to any one of claims 1 to 5, wherein the system is a fusion protein.

9. Plant protection and/or plant growth promotion system according to claim 8, wherein the support function is a spacer of 2-100 amino acids.

10. Use of a plant protection and/or plant growth promotion system according to any one of the preceding claims for the immobilization of an active substance for protecting the plant and/or promoting plant growth.

11. Method for protecting plants and/or promoting plant growth, comprising the following steps:
a) providing a plant protection and/or plant growth promotion system according to any one of claims 1 to 9 and
b) applying the plant protection and/or plant growth promotion system onto a plant.

## Revendications

1. Système phytosanitaire et/ou de promotion de la croissance des plantes, comprenant au moins un peptide d'ancrage pour la liaison accrue à un organe de la plante ou à une partie de la plante, une fonction de support directement ou indirectement liée au peptide d'ancrage et un principe actif destiné à protéger la plante et/ou à favoriser la croissance de la plante et/ou le rendement, dans lequel ledit principe actif est lié de manière physique ou chimique à la fonction de support.

2. Système phytosanitaire et/ou de promotion de la croissance des plantes selon la revendication 1, dans lequel le peptide d'ancrage consiste en 2 à 300 acides aminés.

3. Système phytosanitaire et/ou de promotion de la croissance des plantes selon la revendication 1 ou 2, dans lequel le principe actif est choisi dans le groupe constitué par
- le pesticide, en particulier l'acaricide, l'ovicide, l'insecticide, le molluscicide, le nématicide, le rodenticide et/ou l'avicide,
- l'herbicide, en particulier l'algicide, le graminicide et/ou l'arboricide
- le bactéricide
- le fongicide
- le phytoprotecteur
- les organismes utiles, en particulier les bactéries utiles et les champignons utiles qui colonisent les racines des plantes et/ou se développent dans la rhizosphère
- les agents destinés à favoriser la croissance et/ou la colonisation d'organismes utiles, et
- les agents de croissance des plantes, en particulier éléments nutritifs ou hormones.

4. Système phytosanitaire et/ou de promotion de la croissance des plantes selon l'une quelconque des revendications précédentes, dans lequel la fonction de support est choisie dans le groupe constitué le nanogel, le microgel, le polysome, le polymérosome, le synthosome, l'espaceur polyaminoacide, le colloïdosome et le cubosome.

5. Système phytosanitaire et/ou de promotion de la croissance des plantes selon l'une quelconque des revendications précédentes, dans lequel le peptide d'ancrage se lie à la feuille, au tronc, à la tige, à la racine, au fruit, en particulier à la semence, au bourgeon, à la fleur et/ou au tubercule d'une plante.

6. Système phytosanitaire et/ou de promotion de la croissance des plantes selon l'une quelconque des revendications précédentes, dans lequel la fonction de support est un nanogel ou un microgel et est configurée de telle sorte que le principe actif soit reste sur le support soit est libéré directement, de façon retardée et/ou en fonction de la stimulation.

7. Système phytosanitaire et/ou de promotion de la croissance des plantes selon la revendication 6, dans lequel le stimulus est choisi dans le groupe constitué par les paramètres abiotiques qui sont la valeur pH, la température, l'humidité, la lumière (y compris la lumière ultraviolette), la durée d'irradiation, les impulsions électriques et les impulsions magnétiques et les facteurs biotiques tels que les éliciteurs, les réactions enzymatiques, les motifs moléculaires associés aux microbes (microbe associated molecular pattern), les motifs moléculaires associés aux pathogènes (pathogen associated molecular pattern), les motifs moléculaires associés aux dégâts (damage associated molecular pattern) et les motifs moléculaires associés aux insectes (herbivore associated molecular pattern).

8. Système phytosanitaire et/ou de promotion de la croissance des plantes selon l'une quelconque des revendications 1 à 5, dans lequel le système est une protéine de fusion.

9. Système phytosanitaire et/ou de promotion de la croissance des plantes selon la revendication 8, dans lequel la fonction de support est un espaceur de 2 à 100 acides aminés.

10. Utilisation d'un système phytosanitaire et/ou de promotion de la croissance des plantes selon l'une quelconque des revendications précédentes, pour immobiliser un principe actif pour la protection de la plante et/ou pour favoriser la croissance de la plante.

11. Procédé de protection des plantes et/ou de promotion de la croissance des plantes, comprenant les étapes consistant à:
a) fournir un système phytosanitaire et/ou de promotion de la croissance des plantes selon l'une quelconque des revendications 1 à 9, et
b) appliquer, à une plante, le système phytosanitaire et/ou de promotion de la croissance des plantes.


### SEQUENCE LISTING

<110> Rheinisch-Westfaelische Technische Hochschule Aachen (RWTH)
<120> Pflanzenschutz- und/oder Pflanzenwachstumsfoerderungssystem
<130> RA 1660-02WO
<150> DE102015203317.1
   <151> 2015-02-24
<160> 60
<170> BiSSAP 1.3
<210> 1
   <211> 38
   <212> PRT
   <213> Artificial Sequence
<220>
   <223> Antifungal protein 1
<400> 1
   Ala Gly Cys Ile Lys Asn Gly Gly Arg Cys Asn Ala Ser Ala Gly Pro
   1               5                   10                  15
   Pro Tyr Cys Cys Ser Ser Tyr Cys Phe Gln Ile Ala Gly Gln Ser Tyr
               20                  25                  30
   Gly Val Cys Lys Asn Arg
           35
<210> 2
   <211> 43
   <212> PRT
   <213> Artificial Sequence
<220>
   <223> Cg-Def
<400> 2
   Gly Phe Gly Cys Pro Gly Asn Gln Leu Lys Cys Asn Asn His Cys Lys
   1               5                   10                  15
   Ser Ile Ser Cys Arg Ala Gly Tyr Cys Asp Ala Ala Thr Leu Trp Leu
               20                  25                  30
   Arg Cys Thr Cys Thr Asp Cys Asn Gly Lys Lys
           35                  40
<210> 3
   <211> 32
   <212> PRT
   <213> Artificial Sequence
<220>
   <223> Dermaseptin DA4
<400> 3
   Gly Met Trp Ser Lys Ile Lys Asn Ala Gly Lys Ala Ala Lys Ala Ala
   1               5                   10                  15
   Ala Lys Ala Ala Gly Lys Ala Ala Leu Gly Ala Val Ser Glu Ala Met
               20                  25                  30
<210> 4
   <211> 43
   <212> PRT
   <213> Artificial Sequence
<220>
   <223> Defensin
<400> 4
   Val Thr Cys Asp Leu Leu Ser Phe Glu Ala Lys Gly Phe Ala Ala Asn
   1               5                   10                  15
   His Ser Leu Cys Ala Ala His Cys Leu Ala Ile Gly Arg Arg Gly Gly
               20                  25                  30
   Ser Cys Glu Arg Gly Val Cys Ile Cys Arg Arg
           35                  40
<210> 5
   <211> 47
   <212> PRT
   <213> Artificial Sequence
<220>
   <223> hDermcidin
<400> 5
   Ser Ser Leu Leu Glu Lys Gly Leu Asp Gly Ala Lys Lys Ala Val Gly
   1               5                   10                  15
   Gly Leu Gly Lys Leu Gly Lys Asp Ala Val Glu Asp Leu Glu Ser Val
               20                  25                  30
   Gly Lys Gly Ala Val His Asp Val Lys Asp Val Leu Asp Ser Val
           35                  40                  45
<210> 6
   <211> 42
   <212> PRT
   <213> Artificial Sequence
<220>
   <223> Pelovaterin
<400> 6
   Asp Asp Thr Pro Ser Ser Arg Cys Gly Ser Gly Gly Trp Gly Pro Cys
   1               5                   10                  15
   Leu Pro Ile Val Asp Leu Leu Cys Ile Val His Val Thr Val Gly Cys
               20                  25                  30
   Ser Gly Gly Phe Gly Cys Cys Arg Ile Gly
           35                  40
<210> 7
   <211> 21
   <212> PRT
   <213> Artificial Sequence
<220>
   <223> Thanatin
<400> 7
   Gly Ser Lys Lys Pro Val Pro Ile Ile Tyr Cys Asn Arg Arg Thr Gly
   1               5                   10                  15
   Lys Cys Gln Arg Met
               20
<210> 8
   <211> 25
   <212> PRT
   <213> Artificial Sequence
<220>
   <223> Androctonin
<400> 8
   Arg Ser Val Cys Arg Gln Ile Lys Ile Cys Arg Arg Arg Gly Gly Cys
   1               5                   10                  15
   Tyr Tyr Lys Cys Thr Asn Arg Pro Tyr
               20                  25
<210> 9
   <211> 38
   <212> PRT
   <213> Artificial Sequence
<220>
   <223> TAP_20_N
<400> 9
   Asn Pro Val Ser Cys Val Arg Asn Lys Gly Ile Cys Val Pro Ile Arg
   1               5                   10                  15
   Cys Pro Gly Asn Met Lys Gln Ile Gly Thr Cys Val Gly Arg Ala Val
               20                  25                  30
   Lys Cys Cys Arg Lys Lys
           35
<210> 10
   <211> 77
   <212> PRT
   <213> Artificial Sequence
<220>
   <223> PgD5
<400> 10
   Met Glu Lys Arg Met Gly Ser Leu Ser Val Leu Phe Leu Leu Leu Val
   1               5                   10                  15
   Leu Val Thr Ser Phe Glu Met Gln Val Glu Gly Arg Met Cys Glu Ser
               20                  25                  30
   Gln Ser His Lys Phe Lys Gly Tyr Cys Ala Ser Ser Ser Asn Cys Lys
           35                  40                  45
   Val Val Cys Gln Thr Glu Lys Phe Leu Thr Gly Ser Cys Arg Asp Thr
       50                  55                  60
   His Phe Gly Asn Arg Arg Cys Phe Cys Glu Lys Pro Cys
   65                  70                  75
<210> 11
   <211> 45
   <212> PRT
   <213> Artificial Sequence
<220>
   <223> Alpha-purothionin
<400> 11
   Lys Ser Cys Cys Arg Ser Thr Leu Gly Arg Asn Cys Tyr Asn Leu Cys
   1               5                   10                  15
   Arg Ala Arg Gly Ala Gln Lys Leu Cys Ala Gly Val Cys Arg Cys Lys
               20                  25                  30
   Ile Ser Ser Gly Leu Ser Cys Pro Lys Gly Phe Pro Lys
   35 40 45
<210> 12
   <211> 48
   <212> PRT
   <213> Artificial Sequence
<220>
   <223> Carnobacteriocin B2
<400> 12
   Val Asn Tyr Gly Asn Gly Val Ser Cys Ser Lys Thr Lys Cys Ser Val
   1               5                   10                  15
   Asn Trp Gly Gln Ala Phe Gln Glu Arg Tyr Thr Ala Gly Ile Asn Ser
               20                  25                  30
   Phe Val Ser Gly Val Ala Ser Gly Ala Gly Ser Ile Gly Arg Arg Pro
           35                  40                  45
<210> 13
   <211> 36
   <212> PRT
   <213> Artificial Sequence
<220>
   <223> MMGP1
<400> 13
   Met Leu Trp Ser Ala Ser Met Arg Ile Phe Ala Ser Ala Phe Ser Thr
   1               5                   10                  15
   Arg Gly Leu Gly Thr Arg Met Leu Met Tyr Cys Ser Leu Pro Ser Arg
               20                  25                  30
   Cys Trp Arg Lys
           35
<210> 14
   <211> 38
   <212> PRT
   <213> Artificial Sequence
<220>
   <223> Macaque histatin
<400> 14
   Asp Ser His Glu Glu Arg His His Gly Arg His Gly His His Lys Tyr
   1               5                   10                  15
   Gly Arg Lys Phe His Glu Lys His His Ser His Arg Gly Tyr Arg Ser
               20                  25                  30
   Asn Tyr Leu Tyr Asp Asn
           35
<210> 15
   <211> 76
   <212> PRT
   <213> Artificial Sequence
<220>
   <223> MiAMP1
<400> 15
   Ser Ala Phe Thr Val Trp Ser Gly Pro Gly Cys Asn Asn Arg Ala Glu
   1               5                   10                  15
   Arg Tyr Ser Lys Cys Gly Cys Ser Ala Ile His Gln Lys Gly Gly Tyr
               20                  25                  30
   Asp Phe Ser Tyr Thr Gly Gln Thr Ala Ala Leu Tyr Asn Gln Ala Gly
           35                  40                  45
   Cys Ser Gly Val Ala His Thr Arg Phe Gly Ser Ser Ala Arg Ala Cys
       50                  55                  60
   Asn Pro Phe Gly Trp Lys Ser Ile Phe Ile Gln Cys
   65                  70                  75
<210> 16
   <211> 33
   <212> PRT
   <213> Artificial Sequence
<220>
   <223> MBP-1
<400> 16
   Arg Ser Gly Arg Gly Glu Cys Arg Arg Gln Cys Leu Arg Arg His Glu
   1               5                   10                  15
   Gly Gln Pro Trp Glu Thr Gln Glu Cys Met Arg Arg Cys Arg Arg Arg
               20                  25                  30
   Gly
<210> 17
   <211> 128
   <212> PRT
   <213> Artificial Sequence
<220>
   <223> RNase 7
<400> 17
   Lys Pro Lys Gly Met Thr Ser Ser Gln Trp Phe Lys Ile Gln His Met
   1               5                   10                  15
   Gln Pro Ser Pro Gln Ala Cys Asn Ser Ala Met Lys Asn Ile Asn Lys
               20                  25                  30
   His Thr Lys Arg Cys Lys Asp Leu Asn Thr Phe Leu His Glu Pro Phe
           35                  40                  45
   Ser Ser Val Ala Ala Thr Cys Gln Thr Pro Lys Ile Ala Cys Lys Asn
       50                  55                  60
   Gly Asp Lys Asn Cys His Gln Ser His Gly Ala Val Ser Leu Thr Met
   65                  70                  75                  80
   Cys Lys Leu Thr Ser Gly Lys Tyr Pro Asn Cys Arg Tyr Lys Glu Lys
                   85                  90                  95
   Arg Gln Asn Lys Ser Tyr Val Val Ala Cys Lys Pro Pro Gln Lys Lys
               100                 105                 110
   Asp Ser Gln Gln Phe His Leu Val Pro Val His Leu Asp Arg Val Leu
           115                 120                 125
<210> 18
   <211> 28
   <212> PRT
   <213> Artificial Sequence
<220>
   <223> Shepherin I
<400> 18
   Gly Tyr Gly Gly His Gly Gly His Gly Gly His Gly Gly His Gly Gly
   1               5                   10                  15
   His Gly Gly His Gly His Gly Gly Gly Gly His Gly
               20                  25
<210> 19
   <211> 63
   <212> PRT
   <213> Artificial Sequence
<220>
   <223> Snakin-1
<400> 19
   Gly Ser Asn Phe Cys Asp Ser Lys Cys Lys Leu Arg Cys Ser Lys Ala
   1               5                   10                  15
   Gly Leu Ala Asp Arg Cys Leu Lys Tyr Cys Gly Ile Cys Cys Glu Glu
               20                  25                  30
   Cys Lys Cys Val Pro Ser Gly Thr Tyr Gly Asn Lys His Glu Cys Pro
           35                  40                  45
   Cys Tyr Arg Asp Lys Lys Asn Ser Lys Gly Lys Ser Lys Cys Pro
       50                  55                  60
<210> 20
   <211> 42
   <212> PRT
   <213> Artificial Sequence
<220>
   <223> Stomoxyn
<400> 20
   Arg Gly Phe Arg Lys His Phe Asn Lys Leu Val Lys Lys Val Lys His
   1               5                   10                  15
   Thr Ile Ser Glu Thr Ala His Val Ala Lys Asp Thr Ala Val Ile Ala
               20                  25                  30
   Gly Ser Gly Ala Ala Val Val Ala Ala Thr
           35                  40
<210> 21
   <211> 29
   <212> PRT
   <213> Artificial Sequence
<220>
   <223> VarvF
<400> 21
   Gly Val Pro Ile Cys Gly Glu Thr Cys Thr Leu Gly Thr Cys Tyr Thr
   1               5                   10                  15
   Ala Gly Cys Ser Cys Ser Trp Pro Val Cys Thr Arg Asn
               20                  25
<210> 22
   <211> 46
   <212> PRT
   <213> Artificial Sequence
<220>
   <223> VrD1
<400> 22
   Arg Thr Cys Met Ile Lys Lys Glu Gly Trp Gly Lys Cys Leu Ile Asp
   1               5                   10                  15
   Thr Thr Cys Ala His Ser Cys Lys Asn Arg Gly Tyr Ile Gly Gly Asn
               20                  25                  30
   Cys Lys Gly Met Thr Arg Thr Cys Tyr Cys Leu Val Asn Cys
           35                  40                  45
<210> 23
   <211> 39
   <212> PRT
   <213> Artificial Sequence
<220>
   <223> European bumblebee abaecin
<400> 23
   Phe Val Pro Tyr Asn Pro Pro Arg Pro Tyr Gln Ser Lys Pro Phe Pro
   1               5                   10                  15
   Ser Phe Pro Gly His Gly Pro Phe Asn Pro Lys Ile Gln Trp Pro Tyr
               20                  25                  30
   Pro Leu Pro Asn Pro Gly His
           35
<210> 24
   <211> 37
   <212> PRT
   <213> Artificial Sequence
<220>
   <223> Papiliocin
<400> 24
   Arg Trp Lys Ile Phe Lys Lys Ile Glu Lys Val Gly Arg Asn Val Arg
   1               5                   10                  15
   Asp Gly Ile Ile Lys Ala Gly Pro Ala Val Ala Val Val Gly Gln Ala
               20                  25                  30
   Ala Thr Val Val Lys
           35
<210> 25
   <211> 42
   <212> PRT
   <213> Artificial Sequence
<220>
   <223> BM Moricin
<400> 25
   Ala Lys Ile Pro Ile Lys Ala Ile Lys Thr Val Gly Lys Ala Val Gly
   1               5                   10                  15
   Lys Gly Leu Arg Ala Ile Asn Ile Ala Ser Thr Ala Asn Asp Val Phe
               20                  25                  30
   Asn Phe Leu Lys Pro Lys Lys Arg Lys Ala
           35                  40
<210> 26
   <211> 60
   <212> PRT
   <213> Artificial Sequence
<220>
   <223> Carnocyclin A
<400> 26
   Leu Val Ala Tyr Gly Ile Ala Gln Gly Thr Ala Glu Lys Val Val Ser
   1               5                   10                  15
   Leu Ile Asn Ala Gly Leu Thr Val Gly Ser Ile Ile Ser Ile Leu Gly
               20                  25                  30
   Gly Val Thr Val Gly Leu Ser Gly Val Phe Thr Ala Val Lys Ala Ala
           35                  40                  45
   Ile Ala Lys Gln Gly Ile Lys Lys Ala Ile Gln Leu
       50                  55                  60
<210> 27
   <211> 41
   <212> PRT
   <213> Artificial Sequence
<220>
   <223> Curvacin A
<400> 27
   Ala Arg Ser Tyr Gly Asn Gly Val Tyr Cys Asn Asn Lys Lys Cys Trp
   1               5                   10                  15
   Val Asn Arg Gly Glu Ala Thr Gln Ser Ile Ile Gly Gly Met Ile Ser
               20                  25                  30
   Gly Trp Ala Ser Gly Leu Ala Gly Met
           35                  40
<210> 28
   <211> 25
   <212> PRT
   <213> Artificial Sequence
<220>
   <223> Lactoferricin B
<400> 28
   Phe Lys Cys Arg Arg Trp Gln Trp Arg Met Lys Lys Leu Gly Ala Pro
   1               5                   10                  15
   Ser Ile Thr Cys Val Arg Arg Ala Phe
               20                  25
<210> 29
   <211> 23
   <212> PRT
   <213> Artificial Sequence
<220>
   <223> Magainin 2
<400> 29
   Gly Ile Gly Lys Phe Leu His Ser Ala Lys Lys Phe Gly Lys Ala Phe
   1               5                   10                  15
   Val Gly Glu Ile Met Asn Ser
               20
<210> 30
   <211> 25
   <212> PRT
   <213> Artificial Sequence
<220>
   <223> Pleurocidin
<400> 30
   Gly Trp Gly Ser Phe Phe Lys Lys Ala Ala His Val Gly Lys His Val
   1               5                   10                  15
   Gly Lys Ala Ala Leu Thr His Tyr Leu
               20                  25
<210> 31
   <211> 101
   <212> PRT
   <213> Artificial Sequence
<220>
   <223> Psoriasin
<400> 31
   Met Ser Asn Thr Gln Ala Glu Arg Ser Ile Ile Gly Met Ile Asp Met
   1               5                   10                  15
   Phe His Lys Tyr Thr Arg Arg Asp Asp Lys Ile Asp Lys Pro Ser Leu
               20                  25                  30
   Leu Thr Met Met Lys Glu Asn Phe Pro Asn Phe Leu Ser Ala Cys Asp
           35                  40                  45
   Lys Lys Gly Thr Asn Tyr Leu Ala Asp Val Phe Glu Lys Lys Asp Lys
       50                  55                  60
   Asn Glu Asp Lys Lys Ile Asp Phe Ser Glu Phe Leu Ser Leu Leu Gly
   65                  70                  75                  80
   Asp Ile Ala Thr Asp Tyr His Lys Gln Ser His Gly Ala Ala Pro Cys
                   85                  90                  95
   Ser Gly Gly Ser Gln
               100
<210> 32
   <211> 25
   <212> PRT
   <213> Artificial Sequence
<220>
   <223> Spinigerin
<400> 32
   His Val Asp Lys Lys Val Ala Asp Lys Val Leu Leu Leu Lys Gln Leu
   1               5                   10                  15
   Arg Ile Met Arg Leu Leu Thr Arg Leu
               20                  25
<210> 33
   <211> 133
   <212> PRT
   <213> Artificial Sequence
<220>
   <223> Acanthoscurrin 1
<400> 33
   Asp Val Tyr Lys Gly Gly Gly Gly Gly Arg Tyr Gly Gly Gly Arg Tyr
   1               5                   10                  15
   Gly Gly Gly Gly Gly Tyr Gly Gly Gly Leu Gly Gly Gly Gly Leu Gly
               20                  25                  30
   Gly Gly Gly Leu Gly Gly Gly Lys Gly Leu Gly Gly Gly Gly Leu Gly
           35                  40                  45
   Gly Gly Gly Leu Gly Gly Gly Gly Leu Gly Gly Gly Gly Leu Gly Gly
       50                  55                  60
   Gly Lys Gly Leu Gly Gly Gly Gly Leu Gly Gly Gly Gly Leu Gly Gly
   65                  70                  75                  80
   Gly Gly Leu Gly Gly Gly Gly Leu Gly Gly Gly Lys Gly Leu Gly Gly
                   85                  90                  95
   Gly Gly Leu Gly Gly Gly Gly Leu Gly Gly Gly Arg Gly Gly Gly Tyr
                   100                 105                 110
   Gly Gly Gly Gly Gly Tyr Gly Gly Gly Tyr Gly Gly Gly Tyr Gly Gly
               115                 120                 125
   Gly Lys Tyr Lys Gly
           130
<210> 34
   <211> 101
   <212> PRT
   <213> Artificial Sequence
<220>
   <223> ALF-L
<400> 34
   Asp Gly Ile Trp Thr Gln Leu Ile Phe Thr Leu Val Lys Asn Leu Ala
   1               5                   10                  15
   Thr Leu Trp Gln Ser Gly Asp Phe Gln Phe Leu Asp His Glu Cys His
               20                  25                  30
   Tyr Arg Ile Lys Pro Thr Phe Arg Arg Leu Lys Trp Lys Tyr Lys Gly
           35                  40                  45
   Lys Phe Trp Cys Pro Ser Trp Thr Ser Ile Thr Gly Arg Ala Thr Lys
       50                  55                  60
   Ser Ser Arg Ser Gly Ala Val Glu His Ser Val Arg Asn Phe Val Gly
   65                  70                  75                  80
   Gln Ala Lys Ser Ser Gly Leu Ile Thr Gln Arg Gln Ala Glu Gln Phe
                   85                  90                  95
   Ile Ser Gln Tyr Asn
               100
<210> 35
   <211> 79
   <212> PRT
   <213> Artificial Sequence
<220>
   <223> BDEF_TACTR
<400> 35
   Asn Pro Leu Ile Pro Ala Ile Tyr Ile Gly Ala Thr Val Gly Pro Ser
   1               5                   10                  15
   Val Trp Ala Tyr Leu Val Ala Leu Val Gly Ala Ala Ala Val Thr Ala
               20                  25                  30
   Ala Asn Ile Arg Arg Ala Ser Ser Asp Asn His Ser Cys Ala Gly Asn
           35                  40                  45
   Arg Gly Trp Cys Arg Ser Lys Cys Phe Arg His Glu Tyr Val Asp Thr
       50                  55                  60
   Tyr Tyr Ser Ala Val Cys Gly Arg Tyr Phe Cys Cys Arg Ser Arg
   65                  70                  75
<210> 36
   <211> 39
   <212> PRT
   <213> Artificial Sequence
<220>
   <223> PP102
<400> 36
   Gly Ser Cys Ser Cys Ser Gly Thr Ile Ser Pro Tyr Gly Leu Arg Thr
   1               5                   10                  15
   Cys Arg Ala Thr Lys Thr Lys Pro Ser His Pro Thr Thr Lys Glu Thr
               20                  25                  30
   His Pro Gln Thr Leu Pro Thr
           35
<210> 37
   <211> 44
   <212> PRT
   <213> Artificial Sequence
<220>
   <223> Tachystatin A2
<400> 37
   Tyr Ser Arg Cys Gln Leu Gln Gly Phe Asn Cys Val Val Arg Ser Tyr
   1               5                   10                  15
   Gly Leu Pro Thr Ile Pro Cys Cys Arg Gly Leu Thr Cys Arg Ser Tyr
               20                  25                  30
   Phe Pro Gly Ser Thr Tyr Gly Arg Cys Gln Arg Tyr
           35                  40
<210> 38
   <211> 17
   <212> PRT
   <213> Artificial Sequence
<220>
   <223> CecropinA-Magainin2
<400> 38
   Lys Trp Lys Leu Phe Lys Lys Ile Lys Phe Leu His Ser Ala Lys Lys
   1               5                   10                  15
   Phe
<210> 39
   <211> 26
   <212> PRT
   <213> Artificial Sequence
<220>
   <223> Plantaricin A
<400> 39
   Lys Ser Ser Ala Tyr Ser Leu Gln Met Gly Ala Thr Ala Ile Lys Gln
   1               5                   10                  15
   Val Lys Lys Leu Phe Lys Lys Trp Gly Trp
               20                  25
<210> 40
   <211> 25
   <212> PRT
   <213> Artificial Sequence
<220>
   <223> Ocellatin-F1
<400> 40
   Gly Val Val Asp Ile Leu Lys Gly Ala Ala Lys Asp Ile Ala Gly His
   1               5                   10                  15
   Leu Ala Ser Lys Val Met Asn Lys Leu
               20                  25
<210> 41
   <211> 77
   <212> PRT
   <213> Artificial Sequence
<220>
   <223> PgD5
<400> 41
   Met Glu Lys Arg Met Gly Ser Leu Ser Val Leu Phe Leu Leu Leu Val
   1               5                   10                  15
   Leu Val Thr Ser Phe Glu Met Gln Val Glu Gly Arg Met Cys Glu Ser
               20                  25                  30
   Gln Ser His Lys Phe Lys Gly Tyr Cys Ala Ser Ser Ser Asn Cys Lys
           35                  40                  45
   Val Val Cys Gln Thr Glu Lys Phe Leu Thr Gly Ser Cys Arg Asp Thr
       50                  55                  60
   His Phe Gly Asn Arg Arg Cys Phe Cys Glu Lys Pro Cys
   65                  70                  75
<210> 42
   <211> 38
   <212> PRT
   <213> Artificial Sequence
<220>
   <223> TAP 20N
<400> 42
   Asn Pro Val Ser Cys Val Arg Asn Lys Gly Ile Cys Val Pro Ile Arg
   1               5                   10                  15
   Cys Pro Gly Asn Met Lys Gln Ile Gly Thr Cys Val Gly Arg Ala Val
               20                  25                  30
   Lys Cys Cys Arg Lys Lys
           35
<210> 43
   <211> 25
   <212> PRT
   <213> Artificial Sequence
<220>
   <223> Androctonin
<400> 43
   Arg Ser Val Cys Arg Gln Ile Lys Ile Cys Arg Arg Arg Gly Gly Cys
   1               5                   10                  15
   Tyr Tyr Lys Cys Thr Asn Arg Pro Tyr
               20                  25
<210> 44
   <211> 34
   <212> PRT
   <213> Artificial Sequence
<220>
   <223> Adenoregulin
<400> 44
   Gly Leu Trp Ser Lys Ile Lys Glu Val Gly Lys Glu Ala Ala Lys Ala
   1               5                   10                  15
   Ala Ala Lys Ala Ala Gly Lys Ala Ala Leu Gly Ala Val Ser Glu Ala
               20                  25                  30
   Val Gln
<210> 45
   <211> 30
   <212> PRT
   <213> Artificial Sequence
<220>
   <223> Cathelicidin-BF
<400> 45
   Lys Phe Phe Arg Lys Leu Lys Lys Ser Val Lys Lys Arg Ala Lys Glu
   1               5                   10                  15
   Phe Phe Lys Lys Pro Arg Val Ile Gly Val Ser Ile Pro Phe
               20                  25                  30
<210> 46
   <211> 37
   <212> PRT
   <213> Artificial Sequence
<220>
   <223> Cecropin A
<400> 46
   Lys Trp Lys Leu Phe Lys Lys Ile Glu Lys Val Gly Gln Asn Ile Arg
   1               5                   10                  15
   Asp Gly Ile Ile Lys Ala Gly Pro Ala Val Ala Val Val Gly Gln Ala
               20                  25                  30
   Thr Gln Ile Ala Lys
           35
<210> 47
   <211> 47
   <212> PRT
   <213> Artificial Sequence
<220>
   <223> LcI
<400> 47
   Ala Ile Lys Leu Val Gln Ser Pro Asn Gly Asn Phe Ala Ala Ser Phe
   1               5                   10                  15
   Val Leu Asp Gly Thr Lys Trp Ile Phe Lys Ser Lys Tyr Tyr Asp Ser
               20                  25                  30
   Ser Lys Gly Tyr Trp Val Gly Ile Tyr Glu Val Trp Asp Arg Lys
           35                  40                  45
<210> 48
   <211> 58
   <212> PRT
   <213> Artificial Sequence
<220>
   <223> Reutericin-6
<400> 48
   Ile Tyr Trp Ile Ala Asp Gln Phe Gly Ile His Leu Ala Thr Gly Thr
   1               5                   10                  15
   Ala Arg Lys Leu Leu Asp Ala Met Ala Ser Gly Ala Ser Leu Gly Thr
               20                  25                  30
   Ala Phe Ala Ala Ile Leu Gly Val Thr Leu Pro Ala Trp Ala Leu Ala
           35                  40                  45
   Ala Ala Gly Ala Leu Gly Ala Thr Ala Ala
                       50                  55
<210> 49
<400> 49
   000
<210> 50
   <211> 313
   <212> PRT
   <213> Artificial Sequence
<220>
   <223> His-eGFP-10xAla-TEV-CecA
<400> 50
   Met Gly Ser Ser His His His His His His Ser Ser Gly Leu Val Pro
   1               5                   10                  15
   Arg Gly Ser His Met Val Ser Lys Gly Glu Glu Leu Phe Thr Gly Val
               20                  25                  30
   Val Pro Ile Leu Val Glu Leu Asp Gly Asp Val Asn Gly His Lys Phe
           35                  40                  45
   Ser Val Ser Gly Glu Gly Glu Gly Asp Ala Thr Tyr Gly Lys Leu Thr
       50                  55                  60
   Leu Lys Phe Ile Cys Thr Thr Gly Lys Leu Pro Val Pro Trp Pro Thr
   65                  70                  75                  80
   Leu Val Thr Thr Leu Thr Tyr Gly Val Gln Cys Phe Ser Arg Tyr Pro
                   85                  90                  95
   Asp His Met Lys Gln His Asp Phe Phe Lys Ser Ala Met Pro Glu Gly
               100                 105                 110
   Tyr Val Gln Glu Arg Thr Ile Phe Phe Lys Asp Asp Gly Asn Tyr Lys
           115                 120                 125
   Thr Arg Ala Glu Val Lys Phe Glu Gly Asp Thr Leu Val Asn Arg Ile
       130                 135                 140
   Glu Leu Lys Gly Ile Asp Phe Lys Glu Asp Gly Asn Ile Leu Gly His
   145                 150                 155                 160
   Lys Leu Glu Tyr Asn Tyr Asn Ser His Asn Val Tyr Ile Met Ala Asp
                   165                 170                 175
   Lys Gln Lys Asn Gly Ile Lys Val Asn Phe Lys Ile Arg His Asn Ile
               180                 185                 190
   Glu Asp Gly Ser Val Gln Leu Ala Asp His Tyr Gln Gln Asn Thr Pro
           195                 200                 205
   Ile Gly Asp Gly Pro Val Leu Leu Pro Asp Asn His Tyr Leu Ser Thr
       210                 215                 220
   Gln Ser Ala Leu Ser Lys Asp Pro Asn Glu Lys Arg Asp His Met Val
   225                 230                 235                 240
   Leu Leu Glu Phe Val Thr Ala Ala Gly Ile Thr Leu Gly Met Asp Glu
                   245                 250                 255
   Leu Tyr Lys Ala Ala Ala Ala Ala Ala Ala Ala Ala Ala Glu Asn Leu
               260                 265                 270
   Tyr Phe Gln Gly Lys Trp Lys Leu Phe Lys Lys Ile Glu Lys Val Gly
           275                 280                 285
   Gln Asn Ile Arg Asp Gly Ile Ile Lys Ala Gly Pro Ala Val Ala Val
       290                 295                 300
   Val Gly Gln Ala Thr Gln Ile Ala Lys
   305                 310
<210> 51
   <211> 323
   <212> PRT
   <213> Artificial Sequence
<220>
   <223> His-eGFP-10xAla-TEV-LCI
<400> 51
   Met Gly Ser Ser His His His His His His Ser Ser Gly Leu Val Pro
   1               5                   10                  15
   Arg Gly Ser His Met Val Ser Lys Gly Glu Glu Leu Phe Thr Gly Val
               20                  25                  30
   Val Pro Ile Leu Val Glu Leu Asp Gly Asp Val Asn Gly His Lys Phe
           35                  40                  45
   Ser Val Ser Gly Glu Gly Glu Gly Asp Ala Thr Tyr Gly Lys Leu Thr
       50                  55                  60
   Leu Lys Phe Ile Cys Thr Thr Gly Lys Leu Pro Val Pro Trp Pro Thr
   65                  70                  75                  80
   Leu Val Thr Thr Leu Thr Tyr Gly Val Gln Cys Phe Ser Arg Tyr Pro
                   85                  90                  95
   Asp His Met Lys Gln His Asp Phe Phe Lys Ser Ala Met Pro Glu Gly
               100                 105                 110
   Tyr Val Gln Glu Arg Thr Ile Phe Phe Lys Asp Asp Gly Asn Tyr Lys
           115                 120                 125
   Thr Arg Ala Glu Val Lys Phe Glu Gly Asp Thr Leu Val Asn Arg Ile
       130                 135                 140
   Glu Leu Lys Gly Ile Asp Phe Lys Glu Asp Gly Asn Ile Leu Gly His
   145                 150                 155                 160
   Lys Leu Glu Tyr Asn Tyr Asn Ser His Asn Val Tyr Ile Met Ala Asp
                   165                 170                 175
   Lys Gln Lys Asn Gly Ile Lys Val Asn Phe Lys Ile Arg His Asn Ile
               180                 185                 190
   Glu Asp Gly Ser Val Gln Leu Ala Asp His Tyr Gln Gln Asn Thr Pro
           195                 200                 205
   Ile Gly Asp Gly Pro Val Leu Leu Pro Asp Asn His Tyr Leu Ser Thr
       210                 215                 220
   Gln Ser Ala Leu Ser Lys Asp Pro Asn Glu Lys Arg Asp His Met Val
   225                 230                 235                 240
   Leu Leu Glu Phe Val Thr Ala Ala Gly Ile Thr Leu Gly Met Asp Glu
                   245                 250                 255
   Leu Tyr Lys Ala Ala Ala Ala Ala Ala Ala Ala Ala Ala Glu Asn Leu
               260                 265                 270
   Tyr Phe Gln Gly Ala Ile Lys Leu Val Gln Ser Pro Asn Gly Asn Phe
           275                 280                 285
   Ala Ala Ser Phe Val Leu Asp Gly Thr Lys Trp Ile Phe Lys Ser Lys
       290                 295                 300
   Tyr Tyr Asp Ser Ser Lys Gly Tyr Trp Val Gly Ile Tyr Glu Val Trp
   305                 310                 315                 320
   Asp Arg Lys
<210> 52
   <211> 20
   <212> PRT
   <213> Artificial Sequence
<220>
   <223> His-tag
<400> 52
   Met Gly Ser Ser His His His His His His Ser Ser Gly Leu Val Pro
   1               5                   10                  15
   Arg Gly Ser His
               20
<210> 53
   <211> 239
   <212> PRT
   <213> Artificial Sequence
<220>
   <223> eGFP
<400> 53
   Met Val Ser Lys Gly Glu Glu Leu Phe Thr Gly Val Val Pro Ile Leu
   1               5                   10                  15
   Val Glu Leu Asp Gly Asp Val Asn Gly His Lys Phe Ser Val Ser Gly
               20                  25                  30
   Glu Gly Glu Gly Asp Ala Thr Tyr Gly Lys Leu Thr Leu Lys Phe Ile
           35                  40                  45
   Cys Thr Thr Gly Lys Leu Pro Val Pro Trp Pro Thr Leu Val Thr Thr
       50                  55                  60
   Leu Thr Tyr Gly Val Gln Cys Phe Ser Arg Tyr Pro Asp His Met Lys
   65                  70                  75                  80
   Gln His Asp Phe Phe Lys Ser Ala Met Pro Glu Gly Tyr Val Gln Glu
                   85                  90                  95
   Arg Thr Ile Phe Phe Lys Asp Asp Gly Asn Tyr Lys Thr Arg Ala Glu
               100                 105                 110
   Val Lys Phe Glu Gly Asp Thr Leu Val Asn Arg Ile Glu Leu Lys Gly
           115                 120                 125
   Ile Asp Phe Lys Glu Asp Gly Asn Ile Leu Gly His Lys Leu Glu Tyr
       130                 135                 140
   Asn Tyr Asn Ser His Asn Val Tyr Ile Met Ala Asp Lys Gln Lys Asn
   145                 150                 155                 160
   Gly Ile Lys Val Asn Phe Lys Ile Arg His Asn Ile Glu Asp Gly Ser
                   165                 170                 175
   Val Gln Leu Ala Asp His Tyr Gln Gln Asn Thr Pro Ile Gly Asp Gly
               180                 185                 190
   Pro Val Leu Leu Pro Asp Asn His Tyr Leu Ser Thr Gln Ser Ala Leu
           195                 200                 205
   Ser Lys Asp Pro Asn Glu Lys Arg Asp His Met Val Leu Leu Glu Phe
       210                 215                 220
   Val Thr Ala Ala Gly Ile Thr Leu Gly Met Asp Glu Leu Tyr Lys
   225                 230                 235
<210> 54
   <211> 10
   <212> PRT
   <213> Artificial Sequence
<220>
   <223> spacer
<400> 54
   Ala Ala Ala Ala Ala Ala Ala Ala Ala Ala
   1               5                   10
<210> 55
   <211> 7
   <212> PRT
   <213> Artificial Sequence
<220>
   <223> TEV-Schnittstelle
<400> 55
   Glu Asn Leu Tyr Phe Gln Gly
   1 5
<210> 56
   <211> 47
   <212> PRT
   <213> Artificial Sequence
<220>
   <223> LCI WT
<400> 56
   Ala Ile Lys Leu Val Gln Ser Pro Asn Gly Asn Phe Ala Ala Ser Phe
   1 5 10 15
   Val Leu Asp Gly Thr Lys Trp Ile Phe Lys Ser Lys Tyr Tyr Asp Ser
   20 25 30
   Ser Lys Gly Tyr Trp Val Gly Ile Tyr Glu Val Trp Asp Arg Lys
   35 40 45
<210> 57
   <211> 47
   <212> PRT
   <213> Artificial Sequence
<220>
   <223> LCI KR1
<400> 57
   Ala Ile Lys Leu Val Gln Ser Leu Asn Gly Asn Phe Ala Ala Arg Phe
   1 5 10 15
   Val Leu Asp Gly Thr Lys Trp Ile Phe Lys Cys Lys Tyr Tyr Asp Ser
   20 25 30
   Ser Lys Gly Tyr Trp Val Gly Ile Tyr Glu Val Trp Gly Arg Lys
   35 40 45
<210> 58
   <211> 47
   <212> PRT
   <213> Artificial Sequence
<220>
   <223> LCI KR2
<400> 58
   Ala Ile Arg Leu Val Gln Ser Gln Lys Cys Asn Phe Ala Ala Ser Phe
   1 5 10 15
   Val Leu Gly Gly Thr Lys Trp Thr Phe Lys Gly Lys Tyr Tyr Asp Ser
   20 25 30
   Ser Lys Asp Tyr Trp Val Gly Ile Tyr Glu Val Arg Val Arg Lys
   35 40 45
<210> 59
   <211> 47
   <212> PRT
   <213> Artificial Sequence
<220>
   <223> LCI KR3
<400> 59
   Ala Ile Lys Gln Val Gln Ser Pro Asn Gly Asn Phe Ala Ala Ser Phe
   1               5                   10                  15
   Val Leu Asp Gly Thr Lys Trp Ile Phe Lys Ser Lys Tyr Tyr Asp Ser
               20                  25                  30
   Ser Arg Gly Tyr Trp Val Gly Ile Tyr Val Val Trp Asp Arg Lys
           35                  40                  45
<210> 60
   <211> 47
   <212> PRT
   <213> Artificial Sequence
<220>
   <223> LCI KR4
<400> 60
   Ala Ile Lys Leu Val His Ser Pro Asn Gly Asn Phe Ala Ala Ser Phe
   1               5                   10                  15
   Val Leu Asp Gly Thr Lys Trp Ile Phe Lys Ser Lys Phe Tyr Asp Ser
               20                  25                  30
   Ser Lys Gly Tyr Trp Val Gly Thr Tyr Glu Val Trp Ala Arg Lys
           35                  40                  45